# EUROPEAN PATENT SPECIFICATION

(11) **EP 3 316 339 B1**
(45) Date of publication and mention of the grant of the patent: **24.10.2018**
(21) Application number: 16195687.5
(22) Date of filing: 26.10.2016
(51) Int. Cl.: H01M 2/10, H01M 10/653, H01M 10/6551, H01M 10/613, H01M 10/6555, H01M 10/647, H01M 10/6556, H01M 10/6567

(54) **A COOLING SYSTEM FOR COOLING ELECTROCHEMICAL CELLS OF A BATTERY SYSTEM**
KÜHLSYSTEM ZUM KÜHLEN ELEKTROCHEMISCHER ZELLEN EINES BATTERIESYSTEMS
SYSTÈME DE REFROIDISSEMENT DES CELLULES ÉLECTROCHIMIQUES D'UN SYSTÈME DE BATTERIE

(43) Date of publication of application: 02.05.2018
(73) Proprietor: Samsung SDI Co., Ltd., Giheung-gu Yongin-si, Gyeonggi-do 17084 (KR)
(72) Inventor: Golubkov, Andrej, 8010 Graz (AT)
(74) Representative: Gulde & Partner

(56) References cited:
- WO-A1-2011/089121
- US-A1- 2011 104 545
- US-A1- 2012 282 506

## Description

### Field of the Invention

The present invention relates to a cooling system for cooling electrochemical cells of a battery system which comprises a housing, adapted for the reception of at least two stacked electrochemical cells of the battery system.

### Technological Background

During operation of a battery system, high currents are drawn from the battery cells, especially from electrochemical cells of a battery system. Due to ohmic losses, such high currents can cause the electrochemical cells to significantly heat up which decreases the service life time of the electrochemical cells respectively. For this reason, active and passive cooling systems come to use in or with battery systems, which shall cool down the cells during an operation of the battery system.

Due to cost and safety issues, liquid cooling fluids shouldn't be used inside a housing of a battery system. Instead, it is advantageous to cool the electrochemical cells inside the housing of a battery system via the outside surface of the same, wherein cost efficient housings that comprise or consist of plastic with a low thermal conductivity can come to use.

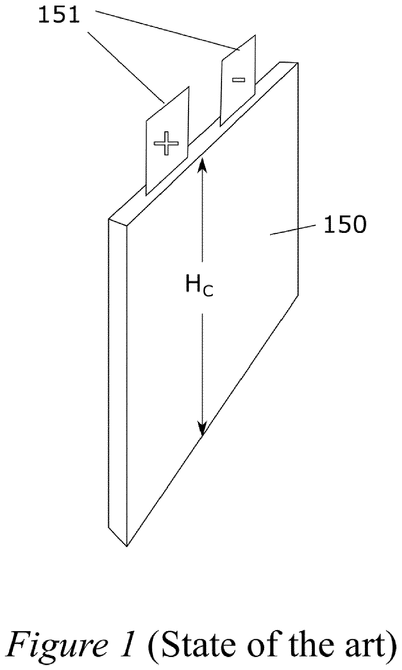

For battery systems with so called electrochemical pouch cells, it is state of the art to use metal plates between the pouch cells, which conduct heat from the cells to a heat exchanger. An electrochemical cell 150 used with such a metal plate, in more detail a pouch cell of the state of the art, is shown in Fig. 1. The pouch cell has a flat shape with a height Hc and comprises two poles 151. One of the two poles 151 is a plus pole while the other is a minus pole.

However, many of the cooling systems for battery systems with such electrochemical cells do not provide for a sufficient cooling of the cells or are too expensive in production.

US 2012/0282506 A1 is directed to an electrochemical energy storage device comprising a casing, in which a plurality of flat galvanic cells are arranged. Between two adjacent flat galvanic cells is in each case, a flat heat conducting body and/or a flat elastic body arranged.

WO 2011/089121 A1 is directed to a cooled energy accumulator comprising at least one plate-shaped energy storage cell, at least one cooling plate, which is arranged on a plate surface of the at least one energy storage cell having a parallel plate surface in such a manner that it is in thermal contact with the energy storage cell and which projects over at least part of a plate edge of the energy storage cell.

It is an objective of the invention to provide a cost efficient cooling system for a battery system which provides for sufficient cooling of the electrochemical cells contained therein.

### Summary of Invention

One or more of the drawbacks of the prior art could be avoided or at least reduced by means of the present invention. In particular, a cooling system for cooling electrochemical cells of a battery system is provided. The cooling system comprises a housing, adapted for the reception of at least two stacked electrochemical cells of the battery system. According to the invention, the housing comprises at least one structured side wall with at least two protrusions therein, wherein the protrusions are adapted for the reception of at least a section of a thermally conductive element arranged between two stacked electrochemical cells.

An advantage of such a cooling system is that it allows to directly transfer the heat from the electrochemical cells of the battery system to the housing of the battery system and thereby to an outside of the same. Therefore, such a cooling system allows for an efficient cooling of a battery system.

The at least one side wall is a structured side wall since it has two protrusions which are integrally formed with the side wall itself.

The at least two protrusions are integrally formed with the at least one structured side wall. Preferably, the at least two protrusions are adapted to each house at least three sides of at least a section of a thermally conductive element of a battery system.

Preferably, the at least one structured side wall is arranged on a bottom side of the housing. Furthermore preferred, the at least one structured side wall is a bottom side of the housing.

The housing comprises two first side walls arranged in parallel to the electrochemical cells receivable by the housing and two second side walls arranged perpendicular to the first side walls, wherein the structured side wall is a second side wall of the housing. According to the invention, the housing comprises two first side walls arranged substantially in parallel to the height of a corresponding electrochemical cell receivable by the housing and two second side walls arranged substantially perpendicular to the first side walls, wherein the structured side wall is a second side wall of the housing. The structured side wall is one of the second side walls of the housing. Such a design of the cooling system allows for a slim shape of the battery system and enables to efficiently transfer heat from an inside of the cooling system to an outside of the same.

According to the invention, the cooling system has at least two protrusions within the at least one structured side wall for the reception of a thermally conductive element respectively, wherein the protrusions give the structured side wall a meandering cross-section. Preferably, the cross-section is a cross-section of the housing which is arrangend in a fictitious plane that is parallel to the height of the housing of the cooling system. The higher the amount of protrusions, the more thermally conductive elements can be used to transfer the heat from the cells to an outside of the battery system. Furthermore, the larger the size of the area where the heat is conducted through the wall of the housing to the surrounding environment, the larger the amount of heat conducted to an outside of the battery system. Therefore, in such an embodiment, the efficiency of heat conductance of the cooling system is increased.

In a preferred embodiment, a protrusion of the structured side wall has a U-shaped cross-section. Furthermore preferred, a protrusion of the structured side wall substantially has a U-shaped cross-section. A protrusion with such a cross section provides for a tight and strong form-fit connection between a thermally conductive element of the battery system and the housing of the cooling system. Furthermore, a ready-for-assembly cell stack together with the thermally conductive elements can easily be slid into the protrusions of the structured side wall of the housing in order to assemble the battery system.

Preferably, a protrusion is formed as a groove in the structured side wall. Such grooves enable an eased assembly of the battery system.

Preferably, the at least one protrusion extends along a direction which is parallel to the first side walls of the housing. Furthermore preferred, the at least one protrusion substantially extends along a direction which is parallel to the first side walls of the housing. Moreover preferred, the at least one protrusion enlarges the total length, the total height or the total width of the housing of the cooling system.

In a preferred embodiment, the housing comprises a plastic material with a low thermal conductivity. Plastic materials are cost efficient and provide for a stable and sufficient thermal insulation.

According to the invention, the cooling system has at least two protrusions within the at least one structured side wall for the reception of a thermally conductive element respectively, wherein the space between the protrusions on the outer side of the structured side wall forms an outer receiving structure, adapted for the reception of a cooling fin. The heat generated by electrochemical cells within a battery system comprising the cooling system is thus efficiently transferred via the thermally conductive elements to the housing of the cooling system and via the housing to e.g. cooling fins of an external component of the cooling system.

Moreover, the cooling system of the invention further comprises a holding device adapted to receive the housing, wherein the holding device has at least one cooling fin corresponding to the outer receiving structure of the structured side wall. Preferably, the holding device itself is connected to a further component, for example to a component of a vehicle. Preferably, the at least one cooling fin is adapted to engage with the outer receiving structure of the structured side wall. Furthermore preferred, the at least one cooling fin is adapted to form-fit with the outer receiving structure of the structured side wall.

The holding device has a body section with the at least one cooling fin extending from the body section. Such a design of the holding device allows for a stable connection of the housing of the cooling system with the holding device and of the holding device with a further component.

In a preferred embodiment, the housing of the cooling system stands on the holding device in a mounted state of the cooling system and the battery system.

In a preferred embodiment, at least one channel is arranged in the body section of the holding device, enabling a cooling fluid to flow through the body section. In such an embodiment, a cooling fluid flowing through the channel and therefore outside of the housing of the cooling system and outside of the battery system can be used to improve the cooling efficiency of the cooling system. Preferably, the at least one channel extends along a direction which is perpendicular to the depth of the at least one protrusion. Furthermore preferred, the at least one channel extends along a direction which is perpendicular to the height of an electrochemical cell receivable by the housing.

Preferably, the at least one cooling fin comprises a thermally conductive material. In such an embodiment, the thermal conductivity of the cooling system is further improved.

Furthermore preferred, the structured side wall has n protrusions arranged next to each other along the length of the cross section of the structured side wall, wherein the holding device is clamped around the first and the n-th protrusion.

Moreover, a battery system with a cooling system according to the invention is provided. The battery system comprises at least two stacked electrochemical cells arranged within the housing and at least one thermally conductive element arranged between the two stacked electrochemical cells. Furthermore, a section of the at least one thermally conductive element is arranged within the corresponding protrusion of the structured side wall. Such a battery system has an improved and cost efficient cooling system and therefore operates safer and more stable.

In a preferred embodiment, the at least one thermally conductive element has the shape of a plate with a height that surpasses the height of the celectrochemical cells. In such an embodminent, the thermally conductive elements protrude from the stack of electrochemical cells so that they are easily connectable with a protrusion of the structured side wall. Furthermore preferred, the at least one thermally conductive element has the shape of a plate with a height extending along the whole height of an electrochemical cell and into the protrusion of the structured side wall.

Preferably, the thermally conductive elements are realized as boards or plates, especially preferred as metal boards or metal plates.

Preferably, the section of the at least one thermally conductive element and the corresponding protrusion in the structured side wall are connected with each other via a form-fit connection. Preferably, the section of the at least one thermally conductive element and the corresponding protrusion in the at least one structured side wall are connected with each other via a latching form-fit connection. In such an embodiment, an easy but very stable connection between the housing of the cooling system and the thermally conductive element is advantageously realized.

Furthermore preferred, in a fully assembled state of the battery system, the section of the at least one thermally conductive element recepted by the corresponding protrusion does not extend along the whole depth of the protrusion. In an even more preferred embodiment, the thermally conductive elements are inserted to X % of the depth of the protrusions, wherein in X ∈ [80 ; 99]. Especially preferred, X is equal to 95 %. In such an embodiment, the protrusions offer a tolerance compensation in a direction which is parallel to the depth of the protrusion, so that the thermally conductive elements and the stack of electrochemical cells can move towards the ground of the protrusions.

Preferably, the depth of the at least one protrusion extends along a direction which is parallel to the height of a first side wall of the housing and/or perpendicular to the length of a second side wall of the housing. Furthermore preferred, the depth of the at least one protrusion substantially extends along a direction which is parallel to the height of a first side wall of the housing and/or substantially perpendicular to the length of a second side wall of the housing. Moreover preferred, the depth of the at least one protrusion substantially extends along a direction which is parallel to the height of an electrochemical cell received by the housing.

Preferably, the battery system comprises m battery cells, wherein m ∈ IN and m ≥ 2. Furthermore preferred, the battery system comprises m-1 thermally conductive elements, wherein one thermally conductive element is arranged between two battery cells respectively.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a pouch cell of the state of the art,
- Fig. 2: illustrates a cross sectional view of a part of an embodiment of a cooling system and a battery system according to the invention in a disassembled state,
- Fig. 3: illustrates a cross sectional view of two different embodiments of holding devices for the housing of the embodiment of a cooling system according to the invention, and
- Fig. 4: illustrates a cross sectional view of the embodiment of a cooling system and a battery system according to the invention in an assembled state.

### Detailed Description of the Invention

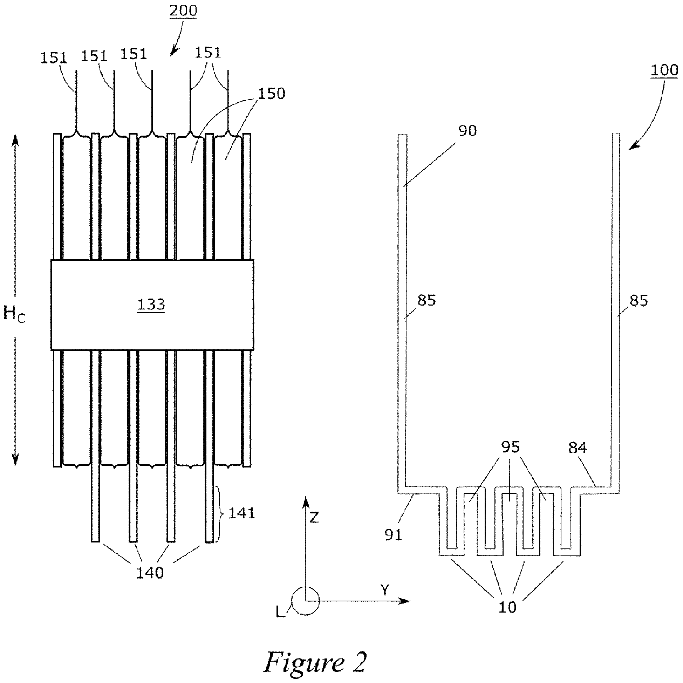

In Fig. 2, a cross sectional view of a part of an embodiment of a cooling system 100 and a battery system 200 according to the invention in a disassembled state is illustrated. On the left side in Fig. 2, the battery system 200 is shown while on the right side in Fig. 2, the cooling system 100 corresponding to the shown battery system 200 is shown. Furthermore, a coordinate system is shown in Fig. 2 for the sake of a better understanding.

The cooling system 100 shown on the right side of Fig. 2 is adapted for cooling the electrochemical cells 150 of the battery system 200 shown on the left side in Fig. 2. The cooling system 100 comprises a housing 90, which is adapted for the reception of at least two, in this embodiment exemplarily of five stacked electrochemical cells 150 of the battery system 200. In this embodiment, the housing 90 is exemplarily made of a plastic material with a low thermal conductivity. However, also other materials can be used to realize the housing 90. In this embodiment, the housing 90 exemplarily comprises two first side walls 85 arranged in parallel to the height Hc of a corresponding electrochemical cell 150 receivable by the housing 90 and two second side walls 84 arranged substantially perpendicular to the first side walls 85, wherein in Fig. 2, only one of the second side walls 84 is shown for the sake of a better understanding. In Fig. 2, the first side walls 85 exemplarily extend along the height of the housing 90 in a Z-direction of the coordinate system, while the second side walls 84 substantially extend along a Y-direction of the coordinate system. Furthermore, the length of the housing 90 extends along a direction L of the coordinate system, pointing into the eye of the observer of Fig. 2.

In this embodiment, the housing 90 exemplarily comprises two structured side walls 91 with four protrusions 10 therein respectively. In Fig. 2, only one of the two structured side walls 91 is shown. Each protrusion 10 is adapted for the reception of a section 141 of a thermally conductive element 140 arranged between two stacked electrochemical cells 150 respectively. In more detail, between two electrochemical cells 150 of the stack of electrochemical cells 150 of the battery system 200 respectively, there is arranged a thermally conductive element 140 which in this embodiment is exemplarily realized as a metal plate respectively. These metal plates protrude from the stack of electrochemical cells 150, wherein each protrusion 10 of the structured side wall 91 shown is adapted to receive a section 141 of a thermally conductive element 140 respectively. In this embodiment, the electrochemical cells 150 and the thermally conductive elements 140 of the battery system 200 are fastened by a fastening means 133, which in this embodiment is exemplarily realized as a metal fastener strap strapped around the stack of electrochemical cells 150 with the thermally conductive elements 140 therein. Each electrochemical cell 150 comprises two poles 151 of which one can be seen in Fig. 2 respectively.

The exemplarily U-shaped protrusions 10 within the structured side walls 91 of the housing 90 form grooves which give the structured side walls 91 a meandering cross-section respectively, wherein the cross-section is arranged in a fictitious plane that is parallel to the height of the housing 90. However, it is also possible to realize other embodiments of cooling systems 100 with fewer or more than four protrusions 10 within a structured side wall 91 respectively, wherein the protrusions 10 can also have other shapes than the ones shown in Fig. 2. The spaces between the protrusions 10 on the outer side of the structured side walls 91 form outer receiving structures 95 respectively, adapted for the reception of a cooling fin (not shown in Fig. 2) respectively. Expressed in other words, the room between the U-shaped protrusions 10, which has an inverted-U-shape, is adapted for the reception of a cooling fin.

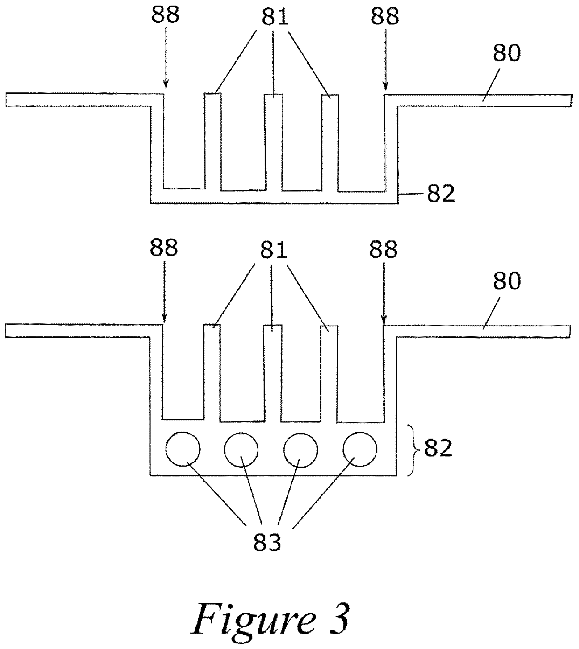

Such cooling fins 81 are part of the of the two different embodiments of holding devices 80 shown in Fig. 3. In more detail, Fig. 3 illustrates a cross sectional view of two different embodiments of holding devices 80 for the housing 90 of the embodiment of a cooling system 100 according to the invention. In other words, both holding devices 80 shown in Fig. 3 can be used with the housing 90 of the cooling system 100 as shown in Fig. 2 respectively. Therefore, the holding devices 80 are both adapted to receive the housing 90 of the cooling system 100 respectively.

Both holding devices 80 exemplarily comprise three cooling fins 81 which correspond to the outer receiving structures 95 of the structured side walls 91 of the housing 80 respectively. Thus, the cooling fins 81 of a holding device 80 shown in Fig. 3 can be inserted into the receiving structures 95 of the structured side walls 91 respectively, engaging with the same. Furthermore, in this embodiment, both holding devices 80 exemplarily comprise a holding frame 88 adapted to engage with the outer protrusions 10 of the structured side walls 91 respectively, forming a form-fit connection with the same respectively. In this embodiment, both embodiments of holding devices 80 have a body section 82 with the cooling fins 81 extending from the body section 82 respectively. Therefore, both holding devices 80 have a comb-shaped design respectively.

In Fig. 3, the lower holding device 80 differs from the upper holding device 80 in that the body section 82 of the lower holding device 80 exemplarily comprises four channels 83 which allow for a cooling fluid to flow through the body section 82 of the holding device 80. Expressed in other words, the cross-section of the lower holding device 80 of Fig. 3 is pierced with four cooling fluid channels 83, wherein the cooling fluid channels 83 are aligned with the inverted-U-shaped structures of the holding device 80 respectively.

In this embodiment, the cooling fins 81 of the holding devices 80 exemplarily each comprise a thermally conductive material respectively. In this embodiment, the cooling fins 81 are exemplarily made of a highly thermally conductive metal. However, also other materials can be used for the cooling fins 81 of a holding device 80 of a cooling system 100 according to the invention. Furthermore, also other holding devices 80 with fewer or more than three cooling fins 81 can be realized. Moreover, other channels for cooling fluids can be realized within a holding device 80.

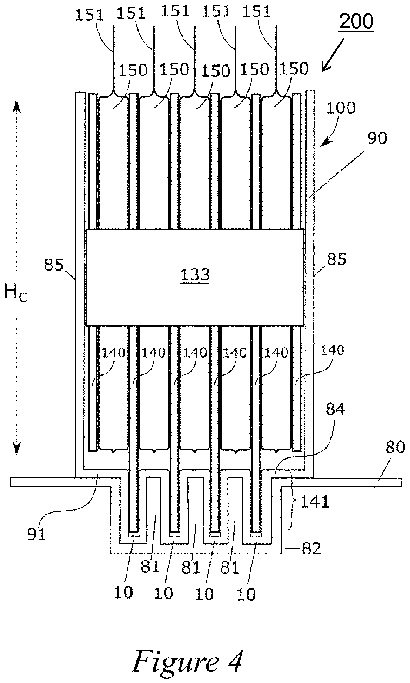

Fig. 4 illustrates a cross sectional view of the embodiment of a cooling system 100 and a battery system 200 according to the invention in an assembled state. Expressed in other words and in more detail, Fig. 4 shows the battery system 200 as shown in Fig. 2 which is arranged within the housing 90 of the cooling system 100 as shown in Fig. 2, wherein this housing 90 is held by the upper holding device 80 as shown in Fig. 3. In an assembled state, the thermally conductive elements 140 are engaged with the protrusions 10 of the structured side walls 91 of the housing 90, wherein only one of the side walls 91 is shown. When the electrochemical cells 150 heat up during an operation of the battery system 200, the generated heat will be conducted via the thermally conductive elements 140 to the protrusions 10 of the structured side walls 91 respectively. From the protrusions 10 of the structured side walls 91, the heat will be conducted to the holding device 80 which conducts the heat to an external surrounding of the battery system 200. Therefore, heat generated within the battery system 200 is efficiently transferred to an outside of the battery system 200 via the cooling system 100 according to the invention.

## Claims

1. A cooling system (100) for cooling electrochemical cells (150) of a battery system (200), comprising:
a housing (90), adapted for the reception of at least two stacked electrochemical cells (150) of the battery system (200),
wherein the housing (90) comprises at least one structured side wall (91), wherein the housing (90) comprises two first side walls (85) arranged in parallel to the electrochemical cells (150) receivable by the housing (90) and two second side walls (84) arranged perpendicular to the first side walls (85), wherein the structured side wall (91) is a second side wall (84) of the housing (90), wherein the at least one structured side wall (91) comprises at least two protrusions (10), each of which is adapted for the reception of a thermally conductive element (140) respectively, said thermally conducting element (140) being arranged between two stacked electrochemical cells (150), wherein the space between the protrusions (10) on the outer side of the structured side wall (91) forms an outer receiving structure (95), adapted for the reception of a cooling fin (81),
**characterized in that**
the cooling system (100) further comprises a holding device (80) adapted to receive the housing (90), wherein the holding device (80) has at least one cooling fin (81) corresponding to the outer receiving structure (95) of the structured side wall (91).

2. The cooling system (100) of claim 1 and with at least two protrusions (10) within the at least one structured side wall (91) for the reception of a thermally conductive element (140) respectively, wherein the protrusions (10) give the structured side wall (91) a meandering cross-section.

3. The cooling system (100) of any of the previous claims, wherein a protrusion (10) of the structured side wall (91) has a U-shaped cross-section.

4. The cooling system (100) of any of the previous claims, wherein a protrusion (10) is formed as a groove in the structured side wall (91).

5. The cooling system (100) of any of the previous claims, wherein the housing (90) comprises a plastic material with a low thermal conductivity.

6. The cooling system (100) of any of the previous claims, wherein the holding device (80) has a body section (82) with the at least one cooling fin (81) extending from the body section (82).

7. The cooling system (100) of claim 6, wherein at least one channel (83) is arranged in the body section (82) of the holding device (80), enabling a cooling fluid to flow through the body section (82).

8. The cooling system (100) of any of the previous claims, wherein the at least one cooling fin (81) comprises a thermally conductive material.

9. A battery system (200) with a cooling system (100) of any of the claims 1 to 8, comprising
at least two stacked electrochemical cells (150) arranged within the housing (90),
at least one thermally conductive element (140) arranged between the two stacked electrochemical cells (150), wherein a section (141) of the at least one thermally conductive element (140) is arranged within the corresponding protrusion (10) of the structured side wall (91).

10. The battery system (200) of claim 9, wherein the at least one thermally conductive element (140) has the shape of a plate with a height that surpasses the height, Hc of the electrochemical cells (150).

11. The battery system (200) of claim 9 or 10, wherein the section of the at least one thermally conductive element (140) and the corresponding protrusion (10) in the structured side wall (91) are connected with each other via a form-fit connection.

12. The battery system (200) of any of the claims 9 to 11, wherein in a fully assembled state of the battery system (200), the section (141) of the at least one thermally conductive element (140) recepted by the corresponding protrusion (10) does not extend along the whole depth of the protrusion (10).

## Patentansprüche

1. Ein Kühlsystem (100) zum Kühlen elektrochemischer Zellen (150) eines Batteriesystems (200), aufweisend:
ein Gehäuse (90), das für die Aufnahme von zumindest zwei gestapelten elektrochemischen Zellen (150) des Batteriesystems (200) ausgelegt ist,
wobei das Gehäuse (90) zumindest eine strukturierte Seitenwand (91) aufweist, wobei das Gehäuse (90) zwei erste Seitenwände (85), die parallel zu den elektrochemischen Zellen (150), die vom Gehäuse (90) aufgenommen werden können, sind, und zwei zweite Seitenwände (84), die perpendikulär zu den ersten Seitenwänden (85) angeordnet sind, aufweist, wobei die strukturierte Seitenwand (91) eine zweite Seitenwand (84) des Gehäuses (90) ist, wobei die zumindest eine strukturierte Seitenwand (91) zumindest zwei Vorsprünge (10), von denen jeder für die Aufnahme jeweils eines wärmeleitenden Elements (140) ausgelegt ist, aufweist, wobei das besagte wärmeleitende Element (140) zwischen zwei gestapelten elektrochemischen Zellen (150) angeordnet ist, wobei der Raum zwischen den Vorsprüngen (10) auf der Außenseite der strukturierten Seitenwand (91) eine äußere Aufnahmestruktur (95), die für die Aufnahme einer Kühlrippe (81) ausgelegt ist, ausbildet,
**dadurch gekennzeichnet, dass**
das Kühlsystem (100) ferner eine Haltevorrichtung (80), die ausgelegt ist, um das Gehäuse (90) aufzunehmen, aufweist, wobei die Haltevorrichtung (80) zumindest eine Kühlrippe (81), die der äußeren Aufnahmestruktur (95) der strukturierten Seitenwand (91) entspricht, aufweist.

2. Das Kühlsystem (100) nach Anspruch 1 und mit zumindest zwei Vorsprüngen (10) in der zumindest einen strukturierten Seitenwand (91) zur Aufnahme jeweils eines wärmeleitenden Elements (140), wobei die Vorsprünge (10) der strukturierten Seitenwand (91) einen mäanderförmigen Querschnitt verleihen.

3. Das Kühlsystem (100) nach einem der vorhergehenden Ansprüche, wobei ein Vorsprung (10) der strukturierten Seitenwand (91) einen U-förmigen Querschnitt aufweist.

4. Das Kühlsystem (100) nach einem der vorhergehenden Ansprüche, wobei ein Vorsprung (10) als Nut in der strukturierten Seitenwand (91) ausgebildet ist.

5. Das Kühlsystem (100) nach einem der vorhergehenden Ansprüche, wobei das Gehäuse (90) ein Kunststoffmaterial mit einer niedrigen Wärmeleitfähigkeit aufweist.

6. Das Kühlsystem (100) nach einem der vorhergehenden Ansprüche, wobei die Haltevorrichtung (80) einen Körperabschnitt (82) mit der zumindest einen Kühlrippe (81), die sich vom Körperabschnitt (82) aus erstreckt, aufweist.

7. Das Kühlsystem (100) nach Anspruch 6, wobei zumindest ein Kanal (83) im Körperabschnitt (82) der Haltevorrichtung (80) angeordnet ist, so dass ein Kühlfluid durch den Körperabschnitt (82) fließen kann.

8. Das Kühlsystem (100) nach einem der vorhergehenden Ansprüche, wobei die zumindest eine Kühlrippe (81) ein wärmeleitendes Material aufweist.

9. Ein Batteriesystem (200) mit einem Kühlsystem (100) nach einem der Ansprüche 1 bis 8, aufweisend
zumindest zwei gestapelte elektrochemische Zellen (150), die im Gehäuse (90) angeordnet sind,
zumindest ein wärmeleitendes Element (140), das zwischen den zwei gestapelten elektrochemischen Zellen (150) angeordnet ist, wobei ein Abschnitt (141) des zumindest einen wärmeleitenden Elements (140) im entsprechenden Vorsprung (10) der strukturierten Seitenwand (91) angeordnet ist.

10. Das Batteriesystem (200) nach Anspruch 9, wobei das zumindest eine wärmeleitende Element (140) die Form einer Platte mit einer Höhe, die die Höhe Hc der elektrochemischen Zellen (150) übertrifft, aufweist.

11. Das Batteriesystem (200) nach Anspruch 9 oder 10, wobei der Abschnitt des zumindest einen wärmeleitenden Elements (140) und der entsprechende Vorsprung (10) in der strukturierten Seitenwand (91) durch eine formschlüssige Verbindung miteinander verbunden sind.

12. Das Batteriesystem (200) nach einem der Ansprüche 9 bis 11, wobei in einem vollständig zusammengebauten Zustand des Batteriesystems (200) der Abschnitt (141) des zumindest einen wärmeleitenden Elements (140), das vom entsprechenden Vorsprung (10) aufgenommen wird, sich nicht entlang der gesamten Tiefe des Vorsprungs (10) erstreckt.

## Revendications

1. Système de refroidissement (100) pour refroidir des cellules électrochimiques (150) d'un système de batterie (200) comprenant :
un boîtier (90) adapté pour la réception d'au moins deux cellules électrochimiques empilées (150) du système de batterie (200),
dans lequel le boîtier (90) comprend au moins une paroi latérale structurée (91), dans lequel le boîtier (90) comprend deux premières parois latérales (85) agencées en parallèle aux cellules électrochimiques (150) pouvant être reçues par le boîtier (90) et deux secondes parois latérales (84) agencées de manière perpendiculaire aux premières parois latérales (85), dans lequel la paroi latérale structurée (91) est une seconde paroi latérale (84) du boîtier (90), dans lequel au moins la ou les parois latérales structurées (91) comprennent au moins deux saillies (10), chacune d'elles étant adaptée pour la réception d'un élément thermo-conducteur (140) respectivement,
ledit élément thermo-conducteur (140) étant agencé entre deux cellules électrochimiques empilées (150), dans lequel l'espace entre les saillies (10) sur le côté extérieur de la paroi latérale structurée (91) forme une structure de réception externe (95), adaptée pour la réception d'une ailette de refroidissement (81),
**caractérisé en ce que**
le système de refroidissement (100) comprend en outre un dispositif de maintien (80) adapté pour recevoir le boîtier (90), dans lequel le dispositif de maintien (80) a au moins une ailette de refroidissement (81) correspondant à la structure de réception extérieure (95) de la paroi latérale structurée (91).

2. Système de refroidissement (100) selon la revendication 1 et avec au moins deux saillies (10) au sein de l'au moins une paroi latérale structurée (91) pour la réception d'un élément thermo-conducteur (140) respectivement, dans lequel les saillies (10) fournissent à la paroi latérale structurée (91) une coupe transversale sinueuse.

3. Système de refroidissement (100) selon l'une quelconque des revendications précédentes, dans lequel une saillie (10) de la paroi latérale structurée (91) a une coupe transversale en forme de U.

4. Système de refroidissement (100) selon l'une quelconque des revendications précédentes, dans lequel une saillie (10) est formée comme un renfoncement dans la structure latérale structurée (91).

5. Système de refroidissement (100) selon l'une quelconque des revendications précédentes, dans lequel le boîtier (90) comprend un matériau plastique présentant une conductivité thermique basse.

6. Système de refroidissement (100) selon l'une quelconque des revendications précédentes, dans lequel le dispositif de maintien (80) a une section de corps (82) avec l'au moins une ailette de refroidissement (81) s'étendant à partir de la section de corps (82).

7. Système de refroidissement (100) selon la revendication 6, dans lequel au moins un canal (83) est agencé dans la section de corps (82) du dispositif de maintien (80), permettant l'écoulement d'un liquide de refroidissement à travers la section de corps (82).

8. Système de refroidissement (100) selon l'une quelconque des revendications précédentes, dans lequel au moins une ailette de refroidissement (81) comprend un matériau thermo-conducteur.

9. Système de batterie (200) avec un système de refroidissement (100) selon l'une quelconque des revendications 1 à 8, comprenant
au moins deux cellules électrochimiques empilées (150) agencées à l'intérieur du boîtier (90),
au moins un élément thermo-conducteur (140) agencé entre les deux cellules électrochimiques empilées (150), dans lequel une section (141) de l'au moins un élément thermo-conducteur (140) est agencée à l'intérieur de la saillie correspondante (10) de la paroi latérale structurée (91) .

10. Système de batterie (200) selon la revendication 9, dans lequel l'au moins un élément thermo-conducteur (140) a la forme d'une plaque avec une hauteur qui surpasse la hauteur Hc des cellules électrochimiques (150).

11. Système de batterie (200) selon la revendication 9 ou 10, dans lequel la section de l'au moins un élément thermo-conducteur (140) et la saillie correspondante (10) dans la paroi latérale structurée (91) sont reliées l'une à l'autre par l'intermédiaire d'une connexion par liaison d'ajustement de forme.

12. Système de batterie (200) selon la revendication 9 à 11, dans lequel, à l'état entièrement monté du système de batterie (200), la section (141) de l'au moins un élément thermo-conducteur (140) réceptionnée par la saillie correspondante (10) ne s'étend pas le long de toute la profondeur de la saillie (10).
